# EUROPÄISCHE PATENTSCHRIFT

(11) **EP 3 784 510 B1**
(45) Veröffentlichungstag und Bekanntmachung des Hinweises auf die Patenterteilung: **13.03.2024**
(21) Anmeldenummer: 19720506.5
(22) Anmeldetag: 18.04.2019
(51) Int. Cl.: B60J 7/057, H02G 3/04

(54) **VERFAHREN ZUM HERSTELLEN EINER ANTRIEBSKABELHALTERUNG FÜR EIN FAHRZEUGDACH UND BAUTEIL FÜR EIN FAHRZEUGDACH**
METHOD FOR PRODUCING A DRIVE CABLE HOLDER FOR A VEHICLE ROOF AND COMPONENT FOR A VEHICLE ROOF
PROCÉDÉ DE FABRICATION D'UN SUPPORT DE CÂBLE D'ENTRAINEMENT POUR TOIT DE VÉHICULE ET COMPOSANTS POUR TOIT DE VÉHICULE

(30) Priorität: 26.04.2018 DE 102018110124
(43) Veröffentlichungstag der Anmeldung: 03.03.2021
(73) Patentinhaber: Webasto SE, 82131 Stockdorf (DE)
(72) Erfinder: REINSCH, Burkhard, 82131 Stockdorf (DE)
(74) Vertreter: Epping - Hermann - Fischer
(86) Internationale Anmeldenummer: PCT/EP2019/060113
(87) Internationale Veröffentlichungsnummer: WO 2019/206812

(56) Entgegenhaltungen:
- DE-A1- 10 039 522
- DE-A1-102015 119 405
- DE-U1- 20 122 831
- US-A1- 2004 169 400
- Kleiven Svein: "A parametric study of energy absorbing foams for head injury prevention", Research Gate, 31 January 2007 (2007-01-31), pages 1-13, XP093023098, Retrieved from the Internet: URL:https://www.researchgate.net/publicati on/266286015_A_parametric_study_of_energy_ absorbing_foams_for_head_injury_prevention [retrieved on 2023-02-13]

## Beschreibung

Es wird ein Verfahren zum Herstellen einer Antriebskabelhalterung für ein Fahrzeugdach angegeben. Außerdem wird ein Bauteil für ein Fahrzeugdach angegeben, dass eine Antriebskabelhalterung aufweist.

Ein Kraftfahrzeug kann eine Dachöffnung aufweisen, die mittels eines beweglichen Deckels verschließbar und zumindest teilweise freigebbar ist. Beispielsweise wird die Bewegung des Deckels mittels eines Antriebs angetrieben, der mittels eines Antriebskabels mit dem Deckel gekoppelt ist. Auch ist es möglich, ein Rollo in einem Kraftfahrzeug vorzusehen, dass mittels eines Antriebs und eines Antriebskabels bewegbar ist. Das Antriebskabel ist beispielsweise in einem Führungsrohr geführt wie in der DE 101 44 742 A1 beschrieben.

Die DE 201 22 831 U1 betrifft ein Antriebskabel, das in einem Kabelrohr geführt ist, welches in einen Trägerrahmen eingeschäumt ist.

US 2004/169400 A1 beschreibt ein Fahrzeugdachmodul, das fest mit einem Karosserierahmen des Fahrzeugs verbunden ist.

DE 10 2015 119 405 A1 betrifft ein Schiebedachmodul mit einem Querteil, an dem eine Antriebsvorrichtung angeordnet ist.

DE 100 39 522 A1 betrifft ein Sonnenrollo, das mittels in eine rahmenartig geformte Innenschale eingeschäumter Elemente an der Innenschale gehalten ist.

Es ist wünschenswert, ein Verfahren zum Herstellen einer Antriebskabelhalterung für ein Fahrzeugdach anzugeben, dass eine einfache Herstellung mit einem guten Integrationsgrad aufweist. Es ist zudem wünschenswert, ein Bauteil für ein Fahrzeugdach anzugeben, dass eine Antriebskabelhalterung aufweist, wobei das Bauteil kostengünstig und vergleichsweise einfach herstellbar ist.

Die Erfindung betriff ein Verfahren mit den Merkmalen gemäß Anspruch 1 und ein Bauteil mit den Merkmalen gemäß Anspruch 8.

Erfindungsgemäß umfasst ein Verfahren zum Herstellen einer Antriebskabelhalterung für ein Fahrzeugdach ein Bereitstellen eines Bauteils für das Fahrzeugdach. Das Bauteil wird in einem Formwerkzeug positioniert. Ein Führungsrohr für ein Antriebskabel wird bereitgestellt. Das Führungsrohr wird in dem Formwerkzeug positioniert. Insbesondere werden das Führungsrohr und das Bauteil relativ zueinander und relativ zu dem Formwerkzeug positioniert, sodass vorgegebene Positionen erreicht werden. Ein Kunststoff wird in das Formwerkzeug eingebracht. Der Kunststoff umgibt im Formwerkzeug das Führungsrohr zumindest abschnittsweise radial vollständig. Der Kunststoff gelangt im Formwerkzeug in Kontakt mit einer Oberfläche des Bauteils. Dadurch wird die Antriebskabelhalterung ausgebildet, die an dem Bauteil befestigt ist. Insbesondere ist die Antriebskabelhalterung ausgebildet, nachdem der Kunststoff ausgehärtet ist.

Das Verfahren ermöglicht ein unmittelbares Anbinden des Führungsrohres an dem Bauteil. Auf weitere Befestigungselemente wie Nieten oder Schrauben oder Klebeverbindungen kann verzichtet werden. Zudem reichen wenige Verfahrensschritte aus. Im Vergleich zu herkömmlichen Herstellungsverfahren, bei denen das Führungsrohr in spritzgießtechnisch hergestellten Kunststoffteilen nachträglich befestigt wird, werden Verfahrensschritte und damit Kosten eingespart. Zudem werden keine Hilfsmittel benötigt, die herkömmlich zum Einführen der Rohre in das Kunststoffteil nötig sind. Die Antriebskabelhalterung ist zudem platzsparender als herkömmliche Kunststoffteile. Zudem weist die Antriebskabelhalterung einen vergleichsweise geringen Bauraumbedarf auf. Somit kann beispielsweise bei einem transparenten Fahrzeugdach die Durchsicht vergrößert werden.

Erfindungsgemäß wird ein Halteelement zum Halten des Führungsrohres in dem Formwerkzeug bereitgestellt. Das Halteelement wird nach dem Einbringen des Kunststoffs entfernt. Dadurch wird ein freier Zugang zu dem Führungsrohr an einer zu dem Halteelement korrespondierten Position der Antriebskabelhalterung ausgebildet. Die Halterung des Führungsrohrs in dem Formwerkzeug ist nur in kurzen Abschnitten erforderlich, in denen die Halteelemente angeordnet werden. Zwischen den Halteelementen ist das Führungsrohr im Formwerkzeug frei zugänglich. Folglich ist in den Bereichen außerhalb der Halteelemente das radial vollständige Umgeben des Führungsrohrs mit dem Kunststoff möglich. An den Halteelementen ist das Führungsrohr nicht vollständig von dem Kunststoff umgeben, sondern nur teilweise. Somit bleibt der freie Zugang, der jedoch auf die Stabilität der Antriebskabelhalterung keine negativen Einflüsse hat.

Gemäß zumindest einer Ausführungsform wird eine Halterung für einen Antrieb bereitgestellt. Die Halterung wird in dem Formwerkzeug vor dem Einbringen des Kunststoffs positioniert. Der Kunststoff wird in das Formwerkzeug eingebracht, sodass der Kunststoff die Halterung hält, wenn die Antriebshalterung ausgebildet ist. Die Halterung wird insbesondere relativ zu dem Bauteil und dem Führungsrohr an einer vorgegebenen Position positioniert, an der in der fertigen Antriebskabelhalterung der Antrieb montiert werden soll. Der Antriebs ist beispielsweise ein elektrischer Antrieb und weist beispielsweise einen elektrischen Motor auf. Der elektrische Motor ist im betriebsfertigen Zustand, insbesondere so in Kontakt mit einem Antriebskabel, das in dem Führungsrohr geführt ist, dass der Antrieb das Führungskabel entlang dem Führungsrohr bewegen kann.

Gemäß zumindest einer Ausführungsform wird eine stoffschlüssige Verbindung zwischen dem Kunststoff und dem Bauteil zum Befestigen der Antriebskabelhalterung an dem Bauteil ausgebildet. Insbesondere wird der Kunststoff in dem Formwerkzeug so eingebracht, dass sich die stoffschlüssige Verbindung ausbildet. Somit ist es möglich, auf weitere mechanische Verbindungen zum Halten der Antriebskabelhalterung an dem Bauteil zu verzichten.

Gemäß zumindest einer Ausführungsform wird eine Mehrzahl von Führungsrohren bereitgestellt, die jeweils ausgebildet sind, ein Antriebskabel zu führen. Die Mehrzahl der Führungsrohre wird in dem Formwerkzeug zumindest teilweise in unterschiedlichen Ebenen positioniert. Die Ebenen sind parallel zu einer Haupterstreckungsrichtung der Führungsrohre beabstandet zueinander. Insbesondere sind die Führungsrohre relativ zueinander im betriebsfertigen Zustand vertikal in den unterschiedlichen Ebenen angeordnet. Somit ist ein geringer Bauraumbedarf für die Antriebskabelhalterung realisierbar. Zudem ist ein enger Abstand der Führungsrohre zueinander realisierbar.

Gemäß zumindest einer Ausführungsform werden die Führungsrohre in dem Formwerkzeug zumindest teilweise überlappend positioniert. Somit sind ein Überkreuzen und ein Übereinanderanordnen der Führungsrohre möglich. Dadurch wird ein geringer Bauraumbedarf der Antriebskabelhalterung realisiert.

Gemäß zumindest einer Ausführungsform wird das Antriebskabel bereitgestellt. Das Antriebskabel wird nach dem Ausbilden der Antriebskabelhalterung in das Führungsrohr eingeführt. Es ist möglich, zunächst die Antriebskabelhalterung an dem Bauteil auszubilden, die das Führungsrohr oder mehrere Führungsrohre aufweist. Nachträglich kann das Antriebskabel oder mehrere Antriebskabel einfach in die jeweiligen Führungsrohre eingebracht werden.

Gemäß zumindest einer Ausführungsform umfasst das Ausbilden der Antriebskabelhalterung ein Schäumverfahren. Insbesondere wird der Kunststoff gegen dem Formwerkzeug aufgeschäumt. Der Kunststoff ist beispielsweise ein Polyurethan. Das Führungsrohr wird in dem Formwerkzeug von dem Kunststoff umschäumt. Beispielsweise wird ein sogenanntes RIM-Verfahren (Reaktion Injektion Moulding) verwendet oder ein anderes Niederdruckverfahren. Beispielsweise werden zwei unterschiedliche Komponenten, beispielsweise Isocyanat und Polyol, in flüssiger Form in einen Gegenstrommischkopf eingebracht, homogenisiert und unter einem geringen Druck von beispielsweise bis zu maximal 6 Bar in das Formwerkzeug eingebracht. Dort reagieren die Komponenten zu Polyurethan. Aufgrund des geringen Drucks, der bei dem Schäumverfahren eingesetzt wird, wird das Führungsrohr nicht verformt. Das Führungsrohr ist beispielsweise ein Kunststoffrohr. Somit ist es möglich, ein biegeelastisches, relativ dünnwandiges Führungsrohr zu verwenden. Die niedrigen Innendrücke im Formwerkzeug vermeiden ein Nachgeben und Verformen des Führungsrohrs beim Ausbilden der Antriebskabelhalterung.

Erfindungsgemäß weist ein Bauteil für ein Fahrzeugdach eine Antriebskabelhalterung auf. Beispielsweise ist das Bauteil mit der Antriebskabelhalterung gemäß einem hier beschriebenen Herstellungsverfahren hergestellt. Die Antriebskabelhalterung weist einen Haltekörper aus einem Kunststoff auf. Die Antriebskabelhalterung weist ein Führungsrohr auf. Das Führungsrohr ist zumindest abschnittsweise radial vollständig von dem Haltekörper umgeben. Der Haltekörper ist einstückig ausgebildet und stoffschlüssig mit dem Bauteil verbunden. Beispielsweise ist der Haltekörper aus einem aufgeschäumten Kunststoff wie einem Polyurethan gebildet.

Die für das Verfahren erläuterten Merkmale und Vorteile gelten auch für das Bauteil und umgekehrt.

Das Bauteil mit dem direkt angeschäumten Haltekörper ermöglicht einen vergleichsweise geringen Bauraumbedarf und dabei eine zuverlässige Abstützung des Führungsrohrs. Zudem ist eine flexible Ausgestaltung der Lage des Führungsrohrs relativ zu dem Bauteil möglich. Es sind keine weiteren Befestigungselemente nötig, um die Antriebskabelhalterung an dem Bauteil zu befestigen. Somit ist ein hoher Integrationsgrad erreichbar.

Gemäß zumindest einer Ausführungsform weist das Bauteil eine Halterung für einen Antrieb auf, die von dem Haltekörper gehalten ist. Somit ist auch eine Schnittstelle zur Montage des Antriebs in die Antriebskabelhalterung integriert.

Gemäß zumindest einer Ausführungsform ist der Haltekörper so elastisch ausgebildet, dass die Antriebskabelhalterung einen Kopfverletzungsfaktor von unter 1500 aufweist. Insbesondere durch die Verwendung eines PUR-Schaums ist es möglich, den Haltekörper mit einer elastischen, energieabsorbierenden Härte auszubilden, sodass der Haltekörper aus dem Kunststoffschaum als Absorber ausgebildet ist. Somit ist der Kopfverletzungsfaktor von unter 1500 im Fahrzeugdachbereich realisierbar. Der Kopfverletzungsfaktor (HIC, Head Injury Criterion) ist beispielsweise gesetzlich vorgegeben. Beispielsweise ist es möglich, mittels des Haltekörpers aus aufgeschäumtem Kunststoff einen Kopfverletzungsfaktor von unter 1000 zu ermöglichen. Somit dient die Antriebskabelhalterung sowohl zum Halten des Führungsrohrs und gegebenenfalls des Antriebs als auch als Absorber um im Fahrzeugdachbereich den geforderten Kopfverletzungsfaktor zu ermöglichen. Somit lassen sich ansonsten erforderliche zusätzliche Absorberschaumteile einsparen, wodurch Montagekosten und Bauteilkosten reduziert werden können. Zudem ist so ein hoher Integrationsgrad erreichbar.

Gemäß zumindest einer Ausführungsform weist das Bauteil eine Mehrzahl von Führungsrohren auf. Die Führungsrohre sind in der Antriebskabelhalterung zumindest teilweise in unterschiedlichen Ebenen angeordnet. Die Ebenen sind jeweils parallel zu einer Haupterstreckungsrichtung der Führungsrohre beabstandet zueinander. Somit ist in normaler Betriebsposition eine Anordnung der Führungsrohre vertikal und horizontal beabstandet zueinander möglich. Beispielsweise überlappen und/oder überkreuzen sich die Führungsrohre zumindest teilweise. Somit lässt sich Bauraum einsparen.

Gemäß zumindest einer Ausführungsform ist das Bauteil ein Rahmenelement für eine Dachöffnung des Fahrzeugdachs. Insbesondere ist das Bauteil das Rahmenelement, das quer zur Hauptfahrtrichtung des Fahrzeugs entlang der Windschutzscheibe angeordnet ist.

Weitere Vorteile, Merkmale und Weiterbildungen ergeben sich aus den nachfolgenden, in Zusammenhang mit den Figuren erläuterten Ausführungsbeispielen. Gleiche, gleichartige oder gleichwirkende Elemente können figurenübergreifend mit den gleichen Bezugszeichen versehen sein. Es zeigen:
Figur 1 eine schematische Darstellung eines Kraftfahrzeug gemäß einem Ausführungsbeispiel,
Figur 2 eine schematische Darstellung eines Bauteils gemäß einem Ausführungsbeispiel,
Figur 3 eine schematische Darstellung einer Antriebskabelhalterung gemäß einem Ausführungsbeispiel,
Figur 4 eine schematische Darstellung einer Antriebskabelhalterung gemäß einem Ausführungsbeispiel,
Figur 5 eine schematische Darstellung eines Querschnitts durch eine Antriebskabelhalterung gemäß einem Ausführungsbeispiel, und
Figur 6 eine schematische Darstellung einer Herstellung gemäß einem Ausführungsbeispiel.

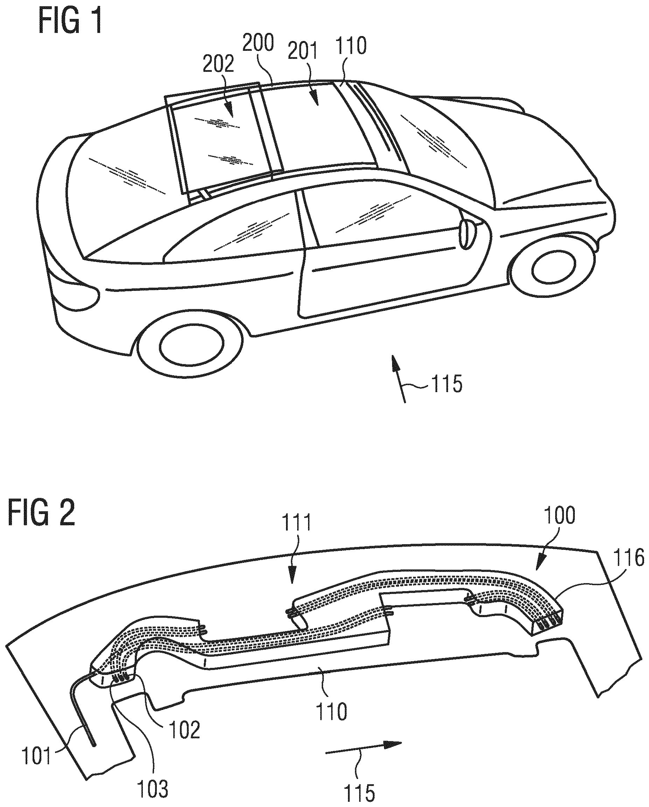

Figur 1 zeigt ein Kraftfahrzeug mit einem Fahrzeugdach 200. Das Fahrzeugdach weist eine Dachöffnung 201 auf, die mittels eines Deckels 202 verschließbar ist. Gemäß Ausführungsbeispiel ist der Deckel 202 relativ zum übrigen Fahrzeugdach 200 beweglich, beispielsweise nach Art eines Schiebedachs. Gemäß weiteren Ausführungsformen ist der Deckel 202 ein sogenanntes Festdachelement, das relativ zum übrigen Fahrzeugdach 200 unbeweglich mit dem Kraftfahrzeug gekoppelt ist.

An der Dachöffnung 201 ist ein Bauteil 101 angeordnet, dass insbesondere ein Rahmenelement ist. Der Rahmen mit dem Bauteil 110 dient beispielsweise zum Führen und Halten des Deckels 202. Alternativ oder zusätzlich dient der Rahmen mit dem Bauteil 110 zum Führen und Halten eines Rollos (nicht explizit gezeigt).

Figur 2 zeigt das Bauteil 110 gemäß einem Ausführungsbeispiel. Das Bauteil 110 weist eine Antriebskabelhalterung 100 auf. Die Antriebskabelhalterung 100 ist unmittelbar an eine Oberfläche 111 des Bauteils 110 angeschäumt. Die Antriebskabelhalterung 100 weist einen Haltekörper 116 aus Kunststoff auf. Der Haltekörper 116 ist beispielsweise aus Polyurethan gebildet. Der Haltekörper 116 ist stoffschlüssig mit dem Bauteil 110 verbunden.

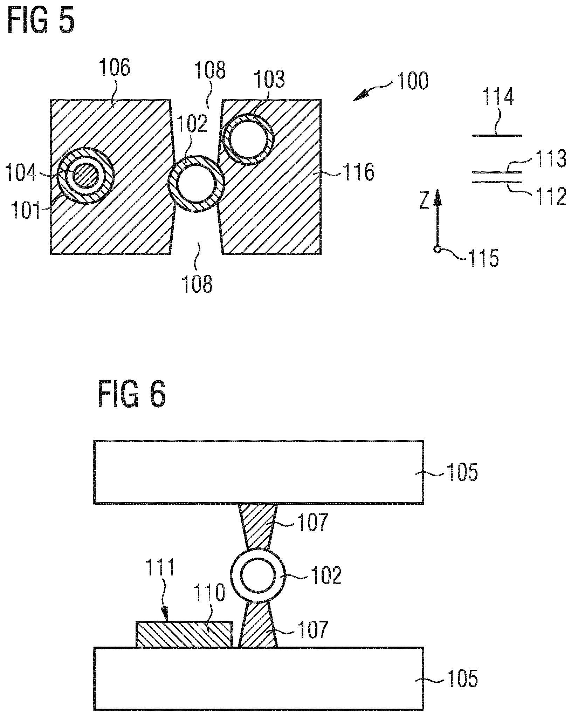

Die Antriebskabelhalterung 100 weist Führungsrohre 101, 102, 103 auf. Die Führungsrohre 101, 102, 103 sind jeweils dazu ausgebildet, ein Antriebskabel 104 (Figur 5) zu führen. Gemäß weiteren Ausführungsbeispielen sind mehr oder weniger Führungsrohre vorgesehen.

Die Führungsrohre 101, 102, 103 sind beispielsweise jeweils Kunststoffrohre. Die Führungsrohre 101, 102, 103 sind stoffschlüssig mit dem Haltekörper 116 verbunden. Der Haltekörper 116 umgibt die Führungsrohre 101, 102, 103 abschnittsweise vollständig, um die Führungsrohre 101, 102, 103 zu halten. Insbesondere quer zu einer Haupterstreckungsrichtung 115 sind die Führungsrohre 101, 102, 103 jeweils abschnittsweise radial vollständig von dem Haltekörper 116 umgeben.

Der Haltekörper 116 ist insbesondere aus einem aufgeschäumten Kunststoff 106 (Figur 5) ausgebildet. Somit ist es möglich, auf spritzgießtechnisch hergestellte Kunststoffteile zu verzichten. Durch das Befestigen der Führungsrohre 101, 102, 103 unmittelbar in dem aufgeschäumten Kunststoff 106 des Haltekörpers 116 sind die Führungsrohre 101, 102, 103 gehalten, ohne dass sie nachträglich in den Haltekörper 116 eingeführt werden müssen. Somit kann auf bauliche Hilfsmittel zum nachträglichen Einführen der Führungsrohre verzichtet werden. Somit ein geringerer Bauraumbedarf realisierbar und die Herstellung und Montage insgesamt weniger aufwendig und damit effizienter.

Der Bauraum, der für das Bauteil 110 und die Antriebskabelhalterung 100 benötigt wird, wird reduziert. Somit wird die Durchsicht bei einem transparenten Deckel 202 erhöht. Die von dem Bauteil 110 belegte Fläche innerhalb der Dachöffnung 201 wird reduziert.

Die Führungsrohre 101, 102, 103 können quer zur Hauptausbreitungsrichtung 115 versetzt angeordnet werden (Figur 5). Zudem ist es möglich, die Führungsrohre 101, 102, 103 in geringem Abstand zueinander, überlappend und/oder überkreuzend anzuordnen. Somit ist es möglich, eine Vielzahl von Führungsrohren 101, 102, 103 in engem Abstand zueinander und übereinander anzuordnen und dabei einen flexiblen Gestaltungsspielraum zu realisieren. Der Haltekörper 116 stützt dabei nach dem Aushärten des Kunststoffs 106 die Führungsrohre 101, 102, 103 ausreichend ab, sodass im Betrieb eine verlässliche Führung der Antriebskabel 104 möglich ist. Zug- und/oder Druckkräfte werden verlässlich abgestützt.

Der Haltekörper 116 ist insbesondere nicht mittels eines Spritzgussverfahrens hergestellt, bei dem vergleichsweise hohe Innendrücke in dem Formwerkzeug herrschen. Die vergleichsweise hohen Innendrücke würden dazu führen, dass die vergleichsweise dünnwandigen Führungsrohre 101, 102, 103 nachgeben und verformt würden. Der Haltekörper 116 ist mittels eines Schaumverfahrens hergestellt, bei dem in einem Formwerkzeug 105 (Figur 6) vergleichsweise geringe Drücke von bis zu maximal 6 Bar herrschen. Beim Aufschäumen der Komponenten in dem Formwerkzeug 105 breitet sich der Kunststoff 106 so aus, dass er die Führungsrohre 101, 102, 103 ausreichend umgibt, um diese zu halten. Dabei ist es auch möglich, drei, vier oder mehr Rohre übereinander mit geringem Abstand anzuordnen, da der Kunststoff auch derartige Geometrien umgeben kann mittels des Aufschäumens. Die Führungsrohre 101, 102, 103 müssen während dem Schäumverfahren lediglich an einigen wenigen Stellen in dem Formwerkzeug 105 gehalten werden. An den übrigen Bereichen umgibt der Kunststoff 106 nach dem Aushärten die Führungsrohre 101, 102, 103 radial vollständig.

Somit ist es möglich, bei relativ niedrigem Verarbeitungsdruck übereinanderliegende dünnwandige Führungsrohre 101, 102, 103 vollflächig einzuschließen und miteinander zu verbinden. Durch die nahezu vollflächige Umgebung mit dem Kunststoff 106 wird ein Ausknicken der Führungsrohre 101, 102, 103 unter Last verhindert. Es ist möglich, ein vergleichsweise sehr geringes Bauraummaß für mehrere, eng aneinander und/oder übereinanderliegende Führungsrohre 101, 102, 103 zu realisieren.

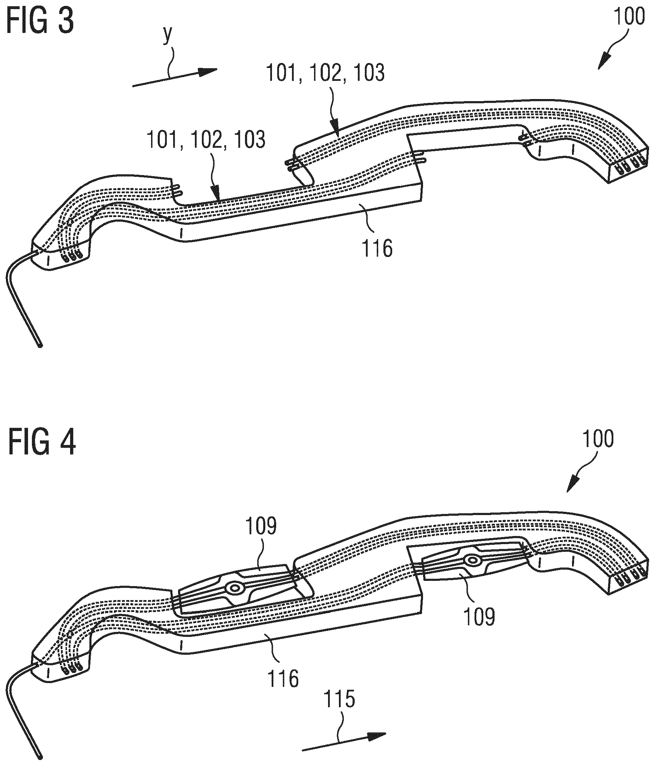

Figur 3 zeigt die Antriebskabelhalterung 100 als eigenständiges Bauelement. Die Antriebskabelhalterung 100 ist in Figur 3 ohne das Bauteil 110 dargestellt. Beispielsweise wird die Antriebskabelhalterung 100 in dem Formwerkzeug 105 als separates Bauteil gefertigt und erst nachträglich an dem Bauteil 110 befestigt. Dazu werden an der Antriebskabelhalterung 100 und insbesondere an dem Haltekörper 116 entsprechende Befestigungslaschen vorgesehen.

Figur 4 zeigt die Antriebskabelhalterung 100 gemäß einem weiteren Ausführungsbeispiel. Die Antriebskabelhalterung 100 weist Halterungen 109 auf. Die Halterungen 109 dienen insbesondere zum Befestigen eines Antriebs oder mehrerer Antriebe an der Antriebskabelhalterung 100. Die Halterungen 109 sind insbesondere stoffschlüssig mit dem Haltekörper 116 verbunden. Somit ist es beispielsweise möglich, die Antriebskabelhalterung 100 mit den Halterung 109 und den Führungsrohren 101, 102, 103 unmittelbar an dem Bauteil 110 anzuformen.

Der Antrieb ist insbesondere ein elektrischer Antrieb und weist beispielsweise einen Elektromotor auf. Der Elektromotor ist im betriebsfertigen Zustand im Eingriff mit dem Antriebskabel 104, sodass der Antrieb die Antriebskabel 104 relativ zu dem entsprechenden Führungsrohr 101, 102, 103 entlang der Hauptausdehnungsrichtung 115 verschieben kann.

Figur 5 zeigt einen Querschnitt quer zur Haupterstreckungsrichtung 115 der Antriebskabelhalterung 100 gemäß einem Ausführungsbeispiel. Die Führungsrohre 101, 102, 103 sind entlang einer Z-Richtung versetzt zueinander angeordnet. Beispielsweise ist die Z-Richtung quer zur Hauptausbreitungsrichtung 115 angeordnet und entspricht in normaler Betriebsposition der Vertikalen. Beispielsweise ist das Führungsrohr 102 im gezeigten Ausführungsbeispiel in normaler Betriebsposition am nächsten am Boden abschnittsweise in einer Ebene 112 angeordnet. Das Führungsrohr 101 ist zumindest abschnittsweise in einer Ebene 113 angeordnet, die entlang der Z-Richtung beabstandet zur Ebene 112 ist. Das Führungsrohr 103 ist zumindest abschnittsweise in einer Ebene 114 angeordnet, die entlang der Z-Richtung beabstandet zu der Ebene 113 und zu der Ebene 112 ist.

In dem Formwerkzeug 105 werden die Führungsrohre 101, 102, 103 jeweils punktuell von Halteelementen 107 (Figur 6) gehalten. In dem fertigen Haltekörper 116 sind an den Stellen, die mit den Positionen der Halteelemente 107 korrespondieren, freie Zugänge 108 zu den Führungsrohren 101, 102, 103 ausgebildet. Diese sind jedoch nur in einem geringen Anteil der Führungsrohre 101, 102, 103 ausgebildet, sodass durch den Haltekörper 116 eine ausreichende Abstützung der Führungsrohre 101, 102, 103 gegeben ist.

Gemäß Ausführungsbeispielen können Einleger beispielsweise aus Metall oder anderen steifen Materialien mit in den Haltekörper 116 eingeschäumt werden. Somit ist beispielsweise eine Stabilisierung des Haltekörpers 116 möglich. Zudem ist es möglich, mittels den Einlegern eine nötige Druckfestigkeit und Kriechfestigkeit an vorgegebenen Stellen zu erreichen.

Der Haltekörper 116 ist insbesondere aus dem Kunststoffschaum so elastisch und energieabsorbierend ausgebildet, dass der Schaumkörper des Haltekörpers 116 als Absorber zur Erlangung von vorgegebenen Kopfaufprallwerten (HIC) im Bereich des Fahrzeugdachs 200 und insbesondere im Bereich des Bauteils 201 wirksam wird. Somit lassen sich die ansonsten erforderlichen zusätzlichen Absorberbauteile einsparen, wodurch weitere Bauteilkosten und Montagekosten vermieden werden können.

Figur 6 zeigt eine schematische Darstellung des Formwerkzeugs 105 gemäß einem Ausführungsführungsbeispiel. Das Bauteil 110 wird gemeinsam mit dem Führungsrohr 102 und gegebenenfalls weiteren Führungsrohren in das Formwerkzeug 105 eingebracht. Das Führungsrohr 102 wird von den Halteelementen 107 relativ zu dem Bauteil 110 in einer vorgegebenen Position gehalten. Die Innenwände des Formwerkzeugs 105 weisen die Form auf, die später der Haltekörper 116 aufweisen soll. Gemäß weiteren Ausführungsformen werden weitere Elemente wie Einleger und/oder die Halterung 109 oder mehrere Halterungen 109 in das Formwerkzeug 105 eingebracht. Nachfolgend wird das auszuschäumende Kunststoff, das beispielsweise aus mehreren Komponenten besteht, in das Formwerkzeug 105 eingebracht. Insbesondere wird der Kunststoff 106 unter einem geringen Druck von unter 10 Bar, insbesondere unter einem Druck zwischen 1 Bar und 6 Bar in das Formwerkzeug 105 eingebracht. Dort reagieren die Komponenten und schäumen sich zu Polyurethan auf. Dabei breitet sich der Kunststoff 106 so aus, dass er das Führungsrohr 102 umgibt und mit dem Bauteil 110 insbesondere an der Oberfläche 111 die stoffschlüssige Verbindung ausbildet.

Somit ist es möglich, bei relativ niedrigem Verarbeitungsdruck übereinanderliegende dünnwandige Führungsrohre 101, 102, 103 vollflächig einzuschließen und miteinander zu verbinden. Durch das unmittelbare Anschäumen der Antriebskabelhalterung 100 an dem Bauteil 110 sind eine kostengünstige Herstellung und ein hoher Integrationsgrad ermöglicht.

### Bezugszeichen

100 Antriebskabelhalterung
101, 102, 103 Führungsrohr
104 Antriebskabel
105 Formwerkzeug
106 Kunststoff
107 Halteelement
108 Zugang
109 Halterung
110 Bauteil
111 Oberfläche
112, 113, 114 Ebene
115 Haupterstreckungsrichtung
116 Haltekörper
200 Fahrzeugdach
201 Dachöffnung
202 Deckel

## Patentansprüche

1. Verfahren zum Herstellen einer Antriebskabelhalterung (100) für ein Fahrzeugdach (200), umfassend:
- Bereitstellen eines Bauteils (110) für das Fahrzeugdach (200),
- Positionieren des Bauteils (110) in einem Formwerkzeug (105),
- Bereitstellen eines Führungsrohres (101) für ein Antriebskabel (104),
- Positionieren des Führungsrohres (101) in dem Formwerkzeug (105),
- Einbringen eines Kunststoffs (106) in das Formwerkzeug (105), sodass der Kunststoff (106) das Führungsrohr (101) zumindest abschnittsweise radial vollständig umgibt und sodass der Kunststoff (106) in Kontakt mit einer Oberfläche (111) des Bauteils (110) gelangt, und dadurch
- Ausbilden der Antriebskabelhalterung (100), die an dem Bauteil (110) befestigt ist, **gekennzeichnet durch**:
- Bereitstellen eines Halteelements (107) zum Halten des Führungsrohres (101) in dem Formwerkzeug (105),
- Entfernen des Halteelements (107) nach dem Einbringen des Kunststoffs (106), und dadurch
- Ausbilden eines freien Zugangs (108) zu dem Führungsrohr (101) an einer zu dem Halteelement (107) korrespondierenden Position der Antriebskabelhalterung (100).

2. Verfahren nach Anspruch 1, umfassend:
- Bereitstellen einer Halterung (109) für einen Antrieb,
- Positionieren der Halterung (109) in dem Formwerkzeug (105) vor dem Einbringen des Kunststoffs (106),
- Einbringen des Kunststoffs (106) in das Formwerkzeug (105), sodass der Kunststoff (106) die Halterung (109) hält, wenn die Antriebskabelhalterung (100) ausgebildet ist.

3. Verfahren nach Anspruch 1 oder 2, umfassend:
- Ausbilden einer stoffschlüssigen Verbindung zwischen dem Kunststoff (106) und dem Bauteil (110) zum Befestigen der Antriebskabelhalterung (100) an dem Bauteil (110).

4. Verfahren nach einem der Ansprüche 1 bis 3, umfassend:
- Bereitstellen einer Mehrzahl von Führungsrohren (101, 102, 103) jeweils für ein Antriebskabel (104),
- Positionieren der Mehrzahl von Führungsrohren (101, 102, 103) in dem Formwerkzeug (105) zumindest teilweise in unterschiedlichen Ebenen (112, 113, 114), die jeweils parallel zu einer Haupterstreckungsrichtung (115) der Führungsrohre (101, 102, 103) beabstandet zueinander sind.

5. Verfahren nach Anspruch 4, umfassend:
- Positionieren der Mehrzahl von Führungsrohren (101, 102, 103) in dem Formwerkzeug (105) zumindest teilweise überlappend.

6. Verfahren nach einem der Ansprüche 1 bis 5, umfassend:
- Bereitstellen des Antriebskabels (104),
- Einführen des Antriebskabels (104) in das Führungsrohr (101, 102, 103) nach dem Ausbilden der Antriebkabelhalterung (100) .

7. Verfahren nach einem der Ansprüche 1 bis 6, bei dem das Ausbilden der Antriebskabelhalterung (100) ein Schäumverfahren umfasst.

8. Bauteil für ein Fahrzeugdach (200), aufweisend eine Antriebskabelhalterung (100), die aufweist:
- einen Haltekörper (116) aus einem Kunststoff (106),
- ein Führungsrohr (101), wobei
- das Führungsrohr (101) zumindest abschnittsweise radial vollständig von dem Haltekörper (116) umgeben ist, und
- der Haltekörper (116) einstückig ausgebildet ist und stoffschlüssig mit dem Bauteil (110) verbunden ist, **gekennzeichnet dadurch, dass**
- in dem Haltekörper freie Zugänge (108) zu dem Führungsrohr (101) ausgebildet sind.

9. Bauteil nach Anspruch 8, aufweisend eine Halterung (109) für einen Antrieb, die von dem Haltekörper (116) gehalten ist.

10. Bauteil nach Anspruch 8 oder 9, bei dem der Haltekörper (116) so elastisch ausgebildet ist, dass die Antriebkabelhalterung (100) einen Kopf-Verletzungs-Faktor von unter 1500 aufweist.

11. Bauteil nach einem der Ansprüche 9 bis 10, aufweisend eine Mehrzahl von Führungsrohren (101, 102, 103), wobei die Führungsrohre (101, 102, 103) in der Antriebskabelhalterung (100) zumindest teilweise in unterschiedlichen Ebenen (112, 113, 114) angeordnet sind, die jeweils parallel zu einer Haupterstreckungsrichtung (115) der Führungsrohre (101, 102, 103) beabstandet zueinander sind.

12. Bauteil nach Anspruch 11, bei dem die Führungsrohre (101, 102, 103) in der Antriebskabelhalterung (100) zumindest teilweise überlappend.

13. Bauteil nach einem der Ansprüche 9 bis 12, das ein Rahmenelement für eine Dachöffnung (201) des Fahrzeugdachs (200) ist.

## Claims

1. Method for producing a drive-cable holder (100) for a vehicle roof (200), comprising:
- providing a component (110) for the vehicle roof (200),
- positioning the component (110) in a moulding tool (105),
- providing a guide tube (101) for a drive cable (104),
- positioning the guide tube (101) in the moulding tool (105),
- introducing a plastic (106) into the moulding tool (105) such that the plastic (106) radially completely surrounds the guide tube (101) at least sectionally and such that the plastic (106) comes into contact with a surface (111) of the component (110), and consequently
- forming the drive-cable holder (100), which is fastened to the component (110), **characterized by**:
- providing a holding element (107) for holding the guide tube (101) in the moulding tool (105),
- removing the holding element (107) after the introduction of the plastic (106), and consequently
- forming a free access (108) to the guide tube (101) at a position of the drive-cable holder (100) that corresponds to the holding element (107).

2. Method according to Claim 1, comprising:
- providing a holder (109) for a drive,
- positioning the holder (109) in the moulding tool (105) prior to the introduction of the plastic (106),
- introducing the plastic (106) into the moulding tool (105) such that the plastic (106) holds the holder (109) when the drive-cable holder (100) has been formed.

3. Method according to Claim 1 or 2, comprising:
- forming a materially bonded connection between the plastic (106) and the component (110) for fastening the drive-cable holder (100) to the component (110).

4. Method according to one of Claims 1 to 3, comprising:
- providing a plurality of guide tubes (101, 102, 103), in each case for a drive cable (104),
- positioning the plurality of guide tubes (101, 102, 103) in the moulding tool (105) at least partially in different planes (112, 113, 114), which are in each case spaced apart from one another parallel to a main direction of extent (115) of the guide tubes (101, 102, 103) .

5. Method according to Claim 4, comprising:
- positioning the plurality of guide tubes (101, 102, 103) in the moulding tool (105) such that they at least partially overlap.

6. Method according to one of Claims 1 to 5, comprising:
- providing the drive cable (104),
- inserting the drive cable (104) into the guide tube (101, 102, 103) after the formation of the drive-cable holder (100).

7. Method according to one of Claims 1 to 6, in the case of which the formation of the drive-cable holder (100) comprises a foaming process.

8. Component for a vehicle roof (200), having a drive-cable holder (100) which has:
- a holding body (116) composed of a plastic (106),
- a guide tube (101), wherein
- the guide tube (101) is radially completely surrounded by the holding body (116) at least sectionally, and
- the holding body (116) is formed in one piece and is connected in a materially bonded manner to the component (110),
**characterized in that**
- free accesses (108) to the guide tube (101) are formed in the holding body.

9. Component according to Claim 8, having a holder (109) for a drive, which holder is held by the holding body (116).

10. Component according to Claim 8 or 9, in the case of which the holding body (116) is of such elastic design that the drive-cable holder (100) has a head-injury factor of less than 1500.

11. Component according to either of Claims 9 and 10, having a plurality of guide tubes (101, 102, 103), wherein the guide tubes (101, 102, 103) are arranged in the drive-cable holder (100) at least partially in different planes (112, 113, 114), which are in each case spaced apart from one another parallel to a main direction of extent (115) of the guide tubes (101, 102, 103) .

12. Component according to Claim 11, in the case of which the guide tubes (101, 102, 103) at least partially overlap in the drive-cable holder (100).

13. Component according to one of Claims 9 to 12, which is a frame element for a roof opening (201) of the vehicle roof (200).

## Revendications

1. Procédé de réalisation d'un support de câble d'entraînement (100) destiné à un toit de véhicule (200), ledit procédé comprenant les étapes suivantes :
- fournir un élément structurel (110) du toit de véhicule (200),
- positionner l'élément structurel (110) dans un moule (105),
- fournir un tube de guidage (101) destiné à un câble d'entraînement (104),
- positionner le tube de guidage (101) dans le moule (105),
- introduire une matière synthétique (106) dans le moule (105) de manière à ce que la matière synthétique (106) entoure complètement le tube de guidage (101) radialement au moins par portions et à ce que la matière synthétique (106) vienne en contact avec une surface (111) de l'élément structurel (110), et
- former le support de câble d'entraînement (100) qui est fixé à l'élément structurel (110), **caractérisé par** les étapes suivantes :
- fournir un élément de retenue (107) destiné à maintenir le tube de guidage (101) dans le moule (105),
- retirer l'élément de retenue (107) après l'introduction de la matière synthétique (106), et
- former un accès libre (108) au tube de guidage (101) au niveau d'une position du support de câble d'entraînement (100) correspondant à l'élément de retenue (107).

2. Procédé selon la revendication 1, comprenant les étapes suivantes :
- fournir un support (109) destiné à un entraînement,
- positionner le support (109) dans le moule (105) avant d'introduire la matière synthétique (106),
- introduire la matière synthétique (106) dans le moule (105) pour que la matière synthétique (106) maintienne le support (109) lorsque le support de câble d'entraînement (100) est formé.

3. Procédé selon la revendication 1 ou 2, comprenant les étapes suivantes :
- former une liaison de matière entre la matière synthétique (106) et l'élément structurel (110) afin de fixer le support de câble d'entraînement (100) à l'élément structurel (110).

4. Procédé selon l'une des revendications 1 à 3, comprenant les étapes suivantes :
- fournir une pluralité de tubes de guidage (101, 102, 103) destinés chacun à un câble d'entraînement (104),
- positionner la pluralité de tubes de guidage (101, 102, 103) dans le moule (105) au moins partiellement dans différents plans (112, 113, 114), qui sont espacés les uns des autres à chaque fois parallèlement à une direction d'extension principale (115) des tubes de guidage (101, 102, 103).

5. Procédé selon la revendication 4, comprenant les étapes suivantes :
- positionner la pluralité de tubes de guidage (101, 102, 103) dans le moule (105) au moins en partie à chevauchement.

6. Procédé selon l'une des revendications 1 à 5, comprenant les étapes suivantes :
- fournir le câble d'entraînement (104),
- insérer le câble d'entraînement (104) dans le tube de guidage (101, 102, 103) après avoir formé le support de câble d'entraînement (100).

7. Procédé selon l'une des revendications 1 à 6, dans lequel la formation du support de câble d'entraînement (100) comprend un procédé de moussage.

8. Élément structurel destiné à un toit de véhicule (200) et comportant un support de câble d'entraînement (100) qui comporte :
- un corps de retenue (116) en matière synthétique (106),
- un tube de guidage (101),
- le tube de guidage (101) étant entouré complètement au moins en portions radialement par le corps de retenue (116), et
- le corps de retenue (116) étant formé d'une seule pièce et étant relié à l'élément structurel (110) par une liaison de matière,
**caractérisé en ce que**
- des accès libres (108) au tube de guidage (101) sont formés dans le corps de retenue.

9. Élément structurel selon la revendication 8, comportant un support (109) destiné à un entraînement et maintenu par le corps de retenue (116).

10. Élément structurel selon la revendication 8 ou 9, dans lequel le corps de retenue (116) est conçu de manière élastique de sorte que le support de câble d'entraînement (100) présente un facteur de traumatisme crânien inférieur à 1500.

11. Élément structurel selon l'une des revendications 9 à 10, comportant une pluralité de tubes de guidage (101, 102, 103), les tubes de guidage (101, 102, 103) étant disposés dans le support de câble d'entraînement (100) au moins en partie dans différents plans (112, 113, 114) qui sont espacés les uns des autres à chaque fois parallèlement à une direction d'extension principale (115) des tubes de guidage (101, 102, 103).

12. Élément structurel selon la revendication 11, dans lequel les tubes de guidage (101, 102, 103) se chevauchent au moins partiellement dans le support de câble d'entraînement (100).

13. Élément structurel selon l'une des revendications 9 à 12, qui est un élément de cadre destiné à une ouverture de toit (201) du toit de véhicule (200) .
